# EUROPEAN PATENT SPECIFICATION

(11) **EP 0 634 301 B1**
(45) Date of publication and mention of the grant of the patent: **27.10.1999**
(21) Application number: 94830362.3
(22) Date of filing: 15.07.1994
(51) Int. Cl.: B60K 41/00

(54) **Structure for the manual acceleration of a vehicle**
Gashandsteuergerät zur Bedienung eines Kraftfahrzeuges
Dispositif pour la commande manuelle de l'accélérateur d'un véhicule

(30) Priority: 16.07.1993 IT RM930483
(43) Date of publication of application: 18.01.1995
(73) Proprietor: GUIDOSIMPLEX s.n.c. di Giancarlo Ventuni e C., I-00166 Roma (IT)
(72) Inventor: Venturini, Giancarlo, I-00166 Roma (IT)
(74) Representative: Iannone, Carlo Luigi

(56) References cited:
- EP-A- 0 114 673
- DE-A- 2 615 005
- FR-A- 2 412 437
- GB-A- 2 192 841
- US-A- 3 938 404
- US-A- 4 078 628
- US-A- 4 798 101

## Description

The present invention concerns a structure for the manual acceleration of a vehicle, and more specifically a structure of the above mentioned kind that allows to obtain the transmission of the motion manually communicated on the steering wheel to the accelerator pedal.

Devices of the kind described in the present invention have been realized and patented since many years ago.

For example, the same Applicant has realized a manual accelerator that was the subject of the Italian patent N° 1,035,222, and a subsequent improvement described in the Italian N° 1,079,429, corresponding to FR-A-2412437, on the basis of which the pre-characterizing portion of claim 1 has been drafted.

Particularly, in this last patent a solution is described wherein an little steering wheel external with respect to the steering wheel is provided, said little steering wheel acting on a star shaped element mounted on a collar element rotating and translating togerther with the little steering wheel, so that the rectilinear motion is transmitted to two little rods connected with the accelerator.

Afterwards, it has been filed by Mr. Gianini Bruno the patent application N° 19244A/83, converted on the basis of a definitive decision issued by the Milan Civil Court into Utility Model, wherein it is described a structure having substantially the same features of the above mentioned device, and wherein the motion transmission to the accelerator is obtained by two little rods pushed by a ring connected to the little steering wheel.

The Applicant has now thought and realized a new solution the main object of which is to provide a structure remarkably simpler and more fittable to the vehicles that are manufactured, concerning the manual acceleration solution.

In fact, the solution that is proposed according to the present invention can be used with any kind of transmission of the motion to the accelerator pedal according to the known techniques, e.g. a linear potentiometer, a hydraulic or mechanic transmission system, etc.

Furthermore, the structure according to the present invention can be adopted with the air-bag, as it now occurs in many vehicle of a certain level.

Moreover, the structure according to the invention can be made completely collapsible, as it is provided by the safety rules in force in this field in the most developed Countries.

It is therefore specific object of the present invention a structure for the manual acceleration in a vehicle, comprising a steering wheel, having at a first side faced toward the driver a manual acceleration element, a hub integral with said steering wheel and coupled to the steering column; a system comprising at least one rod element and at least one bearing element, provided between said steering wheel and said manual acceleration element in such a way to allow the axial movement of the latter with respect to the steering wheel, at least one of said rod element and bearing element being fixedly secured to said steering wheel, motion transfer means for transmitting the axial motion of the manual acceleration element to the vehicle accelerator, and a plate or a little steering wheel, provided on the first side the steering wheel, characterized in that said manual acceleration element is made up of an assembly comprising a dome, provided on the opposite side of the steering wheel and rigidly coupled with said plate or little steering wheel, and in that said rods - bearings system provides at least a bearing having a shape elongated in a direction substantially parallel to the steering column integral with said steering wheel or with said dome and a corresponding number of rods supported by said manual acceleration element or by interposition of a plate coupled to the same steering wheel.

Other features of the device according to the invention are described in the dependent claims 2-11.

The present invention will be now described in an illustrative but not imitative way according to its preferred embodiments, with particular reference to the enclosed drawings, wherein:
figure 1 is an exploded schematic view of a first embodiment of the structure according to the invention;
figure 2 is an exploded schematic view of a second embodiment of the structure according to the invention; and

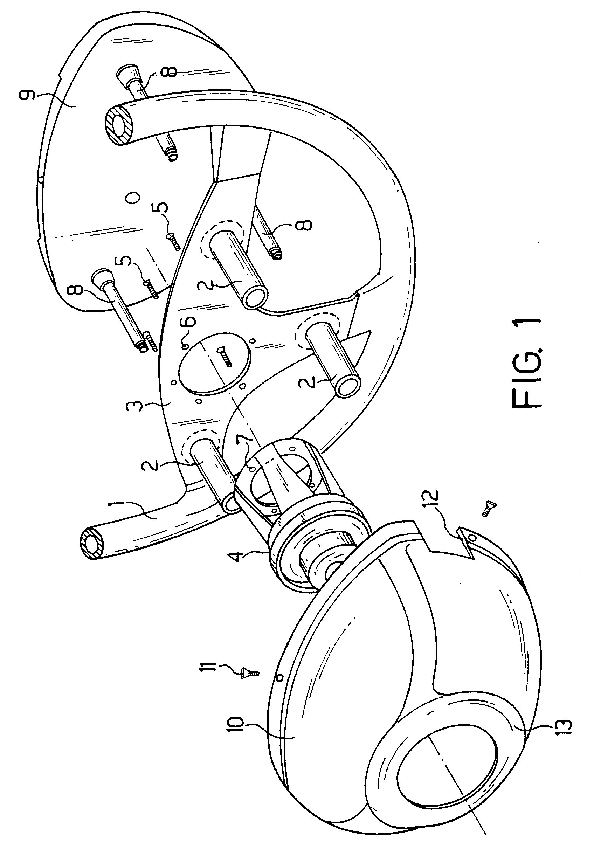

Referring first to the figure 1 of the drawings, it is shown a structure comprising a steering wheel 1 provided with three bearings 2 disposed on its spokes 3.

On the steering wheel 1 a collapsible hub 4 is integrally coupled, by the screws 5 that are screwed in the holes 6 and 7.

On the opposite side with respect to the side coupled with the wheel 1, the steering column (not shown) is coupled to the hub 4.

Three rods 8 fixed on a plate 9 pass through the bearings 3, said plate being provided outside the steering wheel, towards the driver.

The plate 9 is rigidly coupled to a little dome 10, by the fixing screws 11, provided on the other side of the steering wheel 1, i.e. towards the vehicle pedals.

Said little dome 10 is provided with lateral recesses 12, corresponding to the spokes 3, in order to slide along the steering wheel 1.

When assembled, the structure looks like a closed element made up of a little dome 10 and a plate 9, slidably provided, by the coupling rods 8 - bearings 2, about the steering wheel 1.

In fact, the assembly plate 9 - little dome 10 can slide, by the action of the pushing action of the driver, with respect to the steering wheel 1 by the sliding of the rod 8 within the bearings 2.

This movement will cause the transmission of the manual acceleration control from the steering wheel to the accelerator pedal, since it is determined by the manual action of the driver.

Said transfer occurs, for example, by a linear potentiometer (not shown), provided within the little dome 10, an hydraulic system, a mechanical system, or like, coupled on the back side 13 of the little dome, always keeping in mind that the transmission system does not make part of the present patent application.

In front of the closing element 9, the air-bag (not shown) can be provided.

Obviously, in the embodiment shown in figure 1, the plate 9 could be replaced by a little steering wheel of the known kind, in this case not being provided the air-bag.

Moreover, in case the motion is transmitted to the accelerator pedal by a linear potentiometer, the little dome could be omitted, providing the potentiometer directly on the hub.

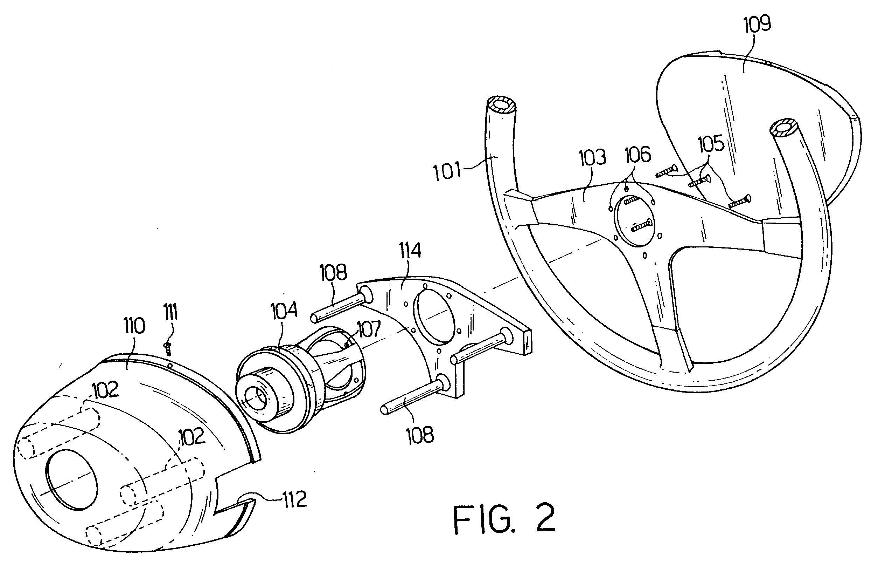

Coming now to examine the solution of figure 2, it provides many elements corresponding to the solution of figure 1, that will be indicated with the same numeral reference adding the number 100.

In the solution of figure 2, the bearings 102 are in this case provided within the little dome 110, while the rods 108 are supported by a plate 114 that is made integral to the steering wheel 101 by the same screws 105 by which the steering wheel 101 is coupled to the hub.

In other words, to the steering wheel 101, on its side faced toward the pedals of the vehicle, not shown, a plate 114, supporting the rods 108, and the hub 104, coupled to the steering column (not shown), are coupled.

In this case too it is realized a plate 109 - little dome 110 assembly, movable with respect to the steering wheel, but in the embodiment shown the bearings 102 will move, while the rods 108 are fixed on the steering wheel 101.

Obviously, the rod 108 could be provided directly on the spokes of the steering wheel 101.

In this case too, the motion transmission can occur as indicated for the embodiment previously described, as well as the plate could be replaced by a known little steering wheel.

Unlike the preceding case, the little dome 110 must be always provided, since it is indispensable for the movable bearings 102.

As it can be noted from the embodiments illustrated in the above, by the solution proposed according to the invention it is not necessary to make changes in the steering column, as it was necessary with the solutions according to the prior art.

Further, it will be well evident to one skilled in the art that the various features described can be modified and combined in different ways, always remaining within the general concept of the invention.

The present invention has been described in an illustrative, but not limitative, way according to its preferred embodiments, but it is to be understood that modifications and/or changes can be introduced by those skilled in the art without departing from the relevant scope as defined in the enclosed.

## Claims

1. Structure for the manual acceleration in a vehicle, comprising a steering wheel (1; 101; 201), having at a first side faced toward the driver a manual acceleration element (9; 109; 209'), a hub (4; 104; 204) integral with said steering wheel (1; 101; 201) and coupled to the steering column; a system comprising at least one rod element (8; 108; 208) and at least one bearing element 8; 102; 202), provided between said steering wheel (1; 101; 201) and said manual acceleration element (9; 109; 209') in such a way to allow the axial movement of the latter with respect to the steering wheel, at least one of said rod element (8; 108; 208) and bearing element (8; 102; 202) being fixedly secured to said steering wheel (1; 101; 201), motion transfer means for transmitting the axial motion of the manual acceleration element to the vehicle accelerator, and a plate (9; 109) or a little steering wheel (209), provided on the first side the steering wheel (1; 101), characterized in that said manual acceleration element is made up of an assembly comprising a dome (10; 110), provided on the opposite side of the steering wheel (1; 101) and rigidly coupled with said plate (9; 109) or little steering wheel, and in that said rods - bearings system provides at least a bearing (2; 102, 202) having a shape elongated in a direction substantially parallel to the steering column integral with said steering wheel (1; 201) or with said dome (10; 110) and a corresponding number of rods (8; 108; 208) supported by said manual acceleration element (9; 209) or by interposition of a plate (114) coupled to the same steering wheel (101).

2. Structure for the manual acceleration in a vehicle according to claim 1, characterized in that within said plate (9; 109) the air-bag is provided.

3. Structure for the manual acceleration in a vehicle according to claim 1, characterized in that only one bearing (202) is provided, centrally disposed on said steering wheel (201).

4. Structure for the manual acceleration in a vehicle according to claim 1, characterized in that two bearings (2) or more are provided, disposed on the steering wheel spokes (3).

5. Structure for the manual acceleration in a vehicle according to claim 1, characterized in that three bearings (2) and three rods (8) are provided.

6. Structure for the manual acceleration in a vehicle according to claim 1, characterized in that at least two bearing elements are provided, said bearings (102) being disposed within said dome (110), and the rods (108) being integral with the steering wheel (101).

7. Structure for the manual acceleration in a vehicle according to claim 6, characterized in that three bearings (2; 102) and three rods (8; 108) are provided.

8. Structure for the manual acceleration in a vehicle according to one of the preceding claims, characterized in that said transfer means for transferring the motion of the manual acceleration element to the vehicle accelerator comprise a linear potentiometer (215), disposed on the hub (204) or within said dome element (10; 110).

9. Structure for the manual acceleration in a vehicle according to one of the preceding claims 1 and 4-8, characterized in that said transfer means for transferring the motion of the manual acceleration element to the vehicle accelerator comprise mechanical, hydraulic or similar means, coupled to the back side of the dome element.

10. Structure for the manual acceleration in a vehicle according to one of the preceding claims, characterized in that it is realized employing collapsible materials.

11. Structure for the manual acceleration in a vehicle according to one of the preceding claims, characterized in that said dome element 10; 110) is realized employing plastic reinforced by fiber glass.

## Patentansprüche

1. Einrichtung zur Handbeschleunigung eines Kraftfahrzeuges, mit einem Steuerrad (1; 101;201;), das an einer ersten zum Kraftfahrer gerichteten Seite einen Handbeschleuniger (9;109;209;), eine an das Steuerrad (1;101;201) integrierte und mit der Lenkspindel gekuppelte Habe (4;104;204) aufweist; einer mindestens einen Bolzen (8;108;208) und mindestens einen zwischen dem vorgenannten Steuerrad (1;101;201) und dem vorgennaten Handbeschleuniger (9;109;209;) angeordneten Lager (2;102;202) enthaltenden Anordnung, die eine Axialbewegung des Handbeschleunigers gegenüber dem Steuerrad gestattet, wobei mindestens einer der vorgenannten Bolzen (8;108;208) und Lager (2;102;202) mit dem Steuerrad (1;101;201) fest verbunden ist; Mittel zur Übertragung der Axialbewegung des Handbeschleunigers an den Kraftfahrzeug-Beschleuniger; und mit einer Platte (9;109) oder keinem Steuerrad (209) an der ersten Seite des Steuerrads (1;101); dadurch gekennzeichnet, dass der vorgenannte Handbeschleuniger aus einer Anordnung besteht, die eine an der gegenüberstehenden Seite des Steuerrads (1;101) vorgesehenen und mit der vorgenannten Platte (9;109) oder kleinen Steuerrad starr verbundenen Haube (10;110) besteht und dass die vorgenannte Bolzen- und Lageranordnung mindestens einen eine längliche und sich in einer wesentlich zur mit dem Steuerrad (1;201) oder mit der Haube (10;110) gekuppelten Lenkspindel parallelen Richtung erstreckende Form aufweisenden Lager (2;102;202) und eine entsprechende Anzahl von durch den Vorgenannten Handbeschleuniger (9;209) oder durch eine dazwischenliegenden und mit dem Steuerrad (101) selbst gekuppelte Platte (114) getragenen Bolzen (8;108;208) aufweist.

2. Einrichtung zur Handbeschleunigung eines Kraftfahrzeuges nach Anspruch 1, dadurch gekennzeichnet, dass in der vorgenannten Plate (9;109) ein Air-bag vorgesehen ist.

3. Einrichtung zur Handbeschleunigung eines Kraftfahrzeuges nach Anspruch 1, dadurch gekennzeichnet, dass nur ein Lager (202) vorgesehen ist, der in der Mitte des Steuerrads (201) angeordnet ist.

4. Einrichtung zur Handbeschleunigung eines Kraftfahrzeuges nach Anspruch 1, dadurch gekennzeichnet, dass zwei oder mehr Lager (2) vorgesehen sind, die an den Steuerradspeichen (3) angeordnet sind.

5. Einrichtung zur Handbeschleunigung eines Kraftfahrzeuges nach Anspruch 1, dadurch gekennzeichnet, dass drei Lager (2) und drei Bolzen vorgesehen sind.

6. Einrichtung zur Handbeschleunigung eines Kraftfahrzeuges nach Anspruch 1, dadurch gekennzeichnet, dass mindestens zwei Lager vorgesehen sind, wobei die vorgenannten Lager (102) innerhalb der vorgenannten Haube (110) angeordnet sind und die Bolzen (108) mit dem Steuerrad (101) integral sind.

7. Einrichtung zur Handbeschleunigung eines Kraftfahrzeuges nach Anspruch 1, dadurch gekennzeichnet, dass drei Lager (2;102) und drei Bolzen (8;108) vorgesehen sind.

8. Einrichtung zur Handbeschleunigung eines Kraftfahrzeuges nach einem der vorhergehenden Ansprüche, dadurch gekennzeichnet, dass die vorgenannten Mittel zur Übertragung der Bewegung des Handbeschleuniger auf den Fahrzeugbeschleuniger ein lineares, auf der Nabe (204) oder in der Haube (10;110) angeordnetes Potentiometer (215) enthalten.

9. Einrichtung zur Handbeschleunigung eines Kraftfahrzeuges nach einem der Ansprüche 1 und 4 bis 8, dadurch gekennzeichnet, dass die vorgenannten Übertragungsmittel zur Übertragung der Bewegung des Handbeschleuniger auf den Fahrzeugbeschleuniger mechanische, hydraulische oder ähnliche Mittel enthalten, die an die Rückseite der Haube angekuppelt sind.

10. Einrichtung zur Handbeschleunigung eines Kraftfahrzeuges nach einem der vorhergehenden Ansprüche, dadurch gekennzeichnet, dass sie aus einem nachgiebbaren Stoff besteht.

11. Einrichtung zur Handbeschleunigung eines Kraftfahrzeuges nach einem der vorhergehenden Ansprüche, dadurch gekennzeichnet, dass die vorgenannte Haube (10;110) aus glasfaservestärktem Kunststoff besteht.

## Revendications

1. Dispositif pour l'accélération manuelle d'un véhicule, comprenant un volant (1; 101; 201), ayant sur un premier côté tourné vers le conducteur un élément d'accélération manuelle (9, 109, 209'), un moyen (4; 104; 204) integral avec ledit volant (1; 101; 201) et accouplé à la colonne de direction; un système ayant au moins un élément à goujon (8; 108; 208) et au moins un élément de support (2, 102, 202) placé entre ledit volant (1; 101; 201) et ledit élément d'accélération manuelle (9; 109; 209) de façon à permettre le deplacement axiale de ce dernier par rapport au volant, au moins un desdits goujons (8; 108; 208) et éléments de support (2, 102, 202) étant accouplé rigidement audit volant (1; 101; 201); des moyens pour transmettre le deplacement axial de l'élément d'accélération manuelle à l'accélérateur du véhicule et une plaque (9, 109) ou un petit volant (209) prévu sur le premier côté du volant (1; 101), caractérisé en ce que ledit élément d'accélération manuelle et formé d'un ensemble comprenant une coupole (10; 110) prévu sur le côté opposé du volant (1; 101) et accouplée rigidement avec ladite plaque (9; 109) ou avec le petit volant et en ce que le système à goujons et éléments de support comprend au moins un élément de support (2; 102; 202) ayant une forme allongée en direction sensiblement parallele à la colonne de direction integrale avec ledit volant (1; 201) ou avec ladite coupole (10; 110) et un nombre correspondant des goujons (8; 108; 208) supportés par ledit élément d'accélération manuelle (9; 209) ou par interposition d'une plaque (114) accouplée audit volant (101).

2. Dispositif pour l'accélération manuelle d'un vehicule selon la revendication 1, caractérisé en ce que dans ladite plaque (9; 109) un air-bag est disposé.

3. Dispositif pour l'accélération manuelle d'un vehicule selon la revendication 1, caractérisé en ce que seulement un support (202) est prévu, qui est disposé sur ledit volant (201).

4. Dispositif pour l'accélération manuelle d'un vehicule selon la revendication 1, caractérisé en ce que deux ou plusieurs supports (2) sont prévus, qui sont disposés sur les rayons du volant (201).

5. Dispositif pour l'accélération manuelle d'un vehicule selon la revendication 1, caractérisé en ce que ils sont prévus trois supports (2) et trois goujons (8).

6. Dispositif pour l'accélération manuelle d'un vehicule selon la revendication 1, caractérisé en ce qu'ils sont prévus au moins deux éléments de support, lesdits supports (102) étant disposés dans la coupole (110) et les goujons étant intégrals avec le volant (101).

7. Dispositif pour l'accélération manuelle d'un vehicule selon la revendication 6, caractérisé en ce que ils sont prévus trois supports (2, 102) et trois goujons (8; 108).

8. Dispositif pour l'accélération manuelle d'un vehicule selon l'une quelconque des revendications précédentes, caractérisé en ce que lesdits moyens de transfèrement pour transfèrer le déplacement de l'élément d'accélération manuelle à l'accélérateur du véhicule, comprendent un potentiomètre linéaire (215), disposé sur le moyeau (204) ou dans ledit élément à coupole (10; 110).

9. Dispositif pour l'accélération manuelle d'un vehicule selon l'une des revendications précédentes 1 et 4-8, caractérisé en ce que lesdits moyens de transfèrements pour transfèrer le déplacement de l'élément d'accélération manuelle à l'accélérateur du véhicule comprendent des moyens mécaniques, hydraulique ou similaires, accouplés au côté postérieur de l'élément à coupole.

10. Dispositif pour l'accélération manuelle d'un vehicule selon l'une des revendications précédentes, caractérisé en ce qu'il est réalisé en employant des matériels souples.

11. Dispositif pour l'accélération manuelle d'un vehicule selon l'une des revendications précédentes, caractérisé en ce que ledit élément à coupole (10; 110) est réalisé en employant des matières plastique renforcés par fibres de verre.
